(19)

Europäisches Patentamt
European Patent Office
Office européen des brevets

(11) **EP 4 506 859 A1**

(12) **EUROPEAN PATENT APPLICATION**
published in accordance with Art. 153(4) EPC

(43) Date of publication:
**12.02.2025 Bulletin 2025/07**

(21) Application number: **23806652.6**

(22) Date of filing: **13.04.2023**

(51) International Patent Classification (IPC):
***G06N 3/08*** (2023.01)

(52) Cooperative Patent Classification (CPC):
**G06V 10/82; G06T 7/0012; G06T 2207/20081;**
**G06T 2207/20084; G06T 2207/30096**

(86) International application number:
**PCT/CN2023/088131**

(87) International publication number:
**WO 2023/221697 (23.11.2023 Gazette 2023/47)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **17.05.2022 CN 202210533141**

(71) Applicant: **Tencent Technology (Shenzhen)**
**Company Limited**
**Shenzhen, Guangdong 518057 (CN)**

(72) Inventors:
• **YANG, Zhongyi**
  **Shenzhen, Guangdong 518057 (CN)**

• **YANG, Sen**
  **Shenzhen, Guangdong 518057 (CN)**
• **XIANG, Jinxi**
  **Shenzhen, Guangdong 518057 (CN)**
• **ZHANG, Jun**
  **Shenzhen, Guangdong 518057 (CN)**
• **HAN, Xiao**
  **Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **METHOD AND APPARATUS FOR TRAINING IMAGE RECOGNITION MODEL, DEVICE AND MEDIUM**

(57) A method and apparatus for training an image processing model, a device, and a medium, relating to the field of machine learning. The method includes: obtaining one or more training samples; segmenting one or more sample images into multiple image patches, and composing a patch set of the image patches; performing feature analysis on the patch set, to obtain a set analysis result, and determining, based on a first difference between the set label and the set analysis result, a relative entropy loss and a first cross entropy loss; performing feature analysis on the image patches, to obtain a patch analysis result, and determining, based on a second difference between the image label and the patch analysis result, a second cross entropy loss; training the image processing model based on the relative entropy loss, the first cross entropy loss, and the second cross entropy loss (305).

FIG. 3

**Description**

RELATED APPLICATION

The present disclosure claims priority to Chinese Patent Application No. 202210533141.4, filed on May 17, 2022 and entitled "METHOD AND APPARATUS FOR TRAINING IMAGE PROCESSING MODEL, DEVICE, AND MEDIUM", which is incorporated by reference in its entirety.

FIELD OF THE TECHNOLOGY

Embodiments of the present disclosure relate to the field of machine learning, and in particular, to a method and apparatus for training an image processing model, a device, and a medium.

BACKGROUND OF THE DISCLOSURE

Image recognition refers to a technology of recognizing image content in an image. For example, whether an animal is included in an image is recognized, and if the animal is included in the image, a location of the animal in the image is recognized. An image processing model is usually configured to recognize image content.

In related arts, image recognition may also be applied to a process of a medical auxiliary diagnosis. A medical pathological image is inputted to an image processing model and information about lesions in the medical pathological image is outputted. Due to a large amount of pixel data in a single medical pathological image, it is usually necessary to extract patches from the medical pathological image and recognize each patch separately, to obtain a comprehensive recognition result.

When whether the lesion is positive or negative is recognized, the medical pathological image is negative for a lesion if all patches are recognized as negative, and the medical pathological image is positive for a lesion if any patch is recognized as positive. Therefore, in a case that image recognition is performed by using the image processing model in related arts, it is largely affected by accuracy of the image processing model, and problems such as a low screening negative rate and poor recognition accuracy may exist.

SUMMARY

Embodiments of the present disclosure provide a method and apparatus for training an image processing model, a device, and a medium, capable of improving accuracy of image recognition and improve a screening negative rate of a medical pathological image. The technical solutions are as follows.

According to one aspect, a method for training an image processing model is provided, performed by a computer device. The method includes:

obtaining one or more training samples each comprising a sample image and an image label, the image label indicating an image content of the sample image;

segmenting one or more sample images into multiple image patches, and composing a patch set of the image patches, the patch set being labeled with a set label based on the image label;

performing feature analysis on the image patches by using the image processing model, to obtain a patch analysis result, and determining, based on a second difference between the image label and the patch analysis result, a second cross entropy loss;

performing feature analysis on the image patches by using the image processing model, to obtain a patch analysis result, and determining, based on a second difference between the image label and the patch analysis result, a second cross entropy loss; and

training the image processing model based on the relative entropy loss, the first cross entropy loss, and the second cross entropy loss, the trained image processing model being configured to recognize image content in an image.

According to another aspect, an apparatus for training an image processing model is provided. The apparatus includes:

an obtaining module, configured to obtain one or more training samples each comprising a sample image and an image label, the image label indicating an image content of the sample image, and

the obtaining module being further configured segment one or more sample images into multiple image patches, and composing a patch set of the image patches, the patch set being labeled with a set label based on the image label;

an analysis module, configured to: perform feature analysis on the patch set by using an image processing model, to obtain a set analysis result, and determine, based on a first difference between the set label and the set analysis result, a relative entropy loss and a first cross entropy loss, and

the analysis module being further configured to: perform feature analysis on the image patches by using the image processing model, to obtain a patch analysis result, and determine, based on a second difference between the image label and the patch analysis result, a second cross entropy loss; and

a training module, configured to train the image processing model based on the relative entropy loss, the first cross entropy loss, and the second cross entropy loss, the trained image processing model being configured to recognize image content in an image.

According to another aspect, a computer device is provided. The computer device includes a processor and a memory. The memory has at least one instruction, at least one program, a code set, or an instruction set stored therein, and the at least one instruction, the at least one program, the code set, or the instruction set is loaded and executed by the processor to implement the method for training an image processing model according to any one of the embodiments of the present disclosure.

According to another aspect, a computer-readable storage medium is provided. The storage medium has at least one instruction, at least one program, a code set, or an instruction set stored thereon, and the at least one instruction, the at least one program, the code set, or the instruction set is loaded and executed by a processor to implement the method for training an image processing model according to any one of the embodiments of the present disclosure.

According to another aspect, a computer program product is provided. The computer program product includes computer instructions stored in a computer-readable storage medium. A processor of a computer device reads the computer instructions from the computer-readable storage medium, and the processor executes the computer instructions, so that the computer device performs the method for training an image processing model according to any one of the embodiments.

The technical solutions provided in the embodiments of the present disclosure have at least the following beneficial effects:

During a training process of an image processing model, for an image that requires patch recognition, the image processing model is trained using image patches and a patch set separately. While overall accuracy of recognizing the image is improved, accuracy of recognizing image content in the image patches is also improved. This not only avoids a problem of an erroneous recognition result of the entire image due to incorrect recognition of a single image patch, but also increases a screening negative rate when the image processing model is used to recognize a lesion in a pathological image, to improve efficiency and accuracy of lesion recognition.

BRIEF DESCRIPTION OF THE DRAWINGS

FIG. 1 is a schematic diagram of a process for training an image processing model according to an exemplary embodiment of the present disclosure.

FIG. 2 is a schematic diagram of an implementation environment according to an exemplary embodiment of the present disclosure.

FIG. 3 is a flowchart of a method for training an image processing model according to an exemplary embodiment of the present disclosure.

FIG. 4 is a schematic diagram of a process of extracting patches from an image according to the embodiment as shown in FIG. 3.

FIG. 5 is a flowchart of a method for training an image processing model according to another exemplary embodiment of the present disclosure.

FIG. 6 is a schematic diagram of a feature extraction process according to the embodiment as shown in FIG. 5.

FIG. 7 is a schematic diagram of another feature extraction process according to the embodiment as shown in FIG. 5.

FIG. 8 is a schematic diagram of still another feature extraction process according to the embodiment as shown in FIG. 5.

FIG. 9 is a schematic diagram of an overall training process according to an exemplary embodiment of the present disclosure.

FIG. 10 is a flowchart of a method for training an image processing model according to still another exemplary embodiment of the present disclosure.

FIG. 11 is a flowchart of an image recognition method according to an exemplary embodiment of the present disclosure.

FIG. 12 is a schematic diagram of a model training effect according to an exemplary embodiment of the present disclosure.

FIG. 13 is a structural block diagram of an apparatus for training an image processing model according to an exemplary embodiment of the present disclosure.

FIG. 14 is a structural block diagram of an apparatus for training an image processing model according to another exemplary embodiment of the present disclosure.

FIG. 15 is a structural block diagram of a computer device according to an exemplary embodiment of the present disclosure.

DESCRIPTION OF EMBODIMENTS

Artificial intelligence (AI): It is a theory, method, technology, and an application system that use a digital computer or a machine controlled by a digital computer to simulate, extend, and expand human intelligence, perceive an environment, acquire knowledge, and use knowledge to obtain an optimal result.

Machine learning (ML): It is a multi-field interdiscipline, and relates to a plurality of disciplines such as the probability theory, statistics, approximation theory, convex analysis, and algorithm complexity theory.

An image recognition technology may be applied to a plurality of fields, such as: a traffic image recognition field, a medical auxiliary diagnosis field, and a home video recognition field.

First, in this embodiment, the medical auxiliary diagnosis field is used as an example for description.

Histopathology is an important part of modern medicine and plays an important role in a cancer diagnosis, etiology analysis, a survival rate prediction, and formulations of personalized treatment plans. Histopathology is a process of obtaining biopsy tissue patches, obtaining fixed tissue patches using paraffin embedding, extracting patches from tissue blocks and coloring the tissue blocks, and the like, and finally using a high-precision scanner to scan the tissue blocks to obtain a high-resolution digital pathology whole slide image. The digital pathology whole slide image includes a large amount of phenotypic information, and a doctor can make a diagnosis by viewing the digital pathology whole slide image (a pathological image for short). However, due to a large size and many details of the pathological image, there are problems such as easy omission of details and low diagnostic efficiency.

With the development of computer hardware and deep learning algorithms, artificial intelligence brings revolutionary changes to many fields. In the medical industry, an AI-assisted diagnosis becomes a new trend. With AI assistance, a pathological image can be automatically analyzed, and a diagnostic report can be automatically generated, which can be further confirmed by a doctor. This new diagnostic method for AI-assistance not only improves efficiency of the doctor, but also improves accuracy of a diagnosis.

In a case that an image processing model is used to recognize a pathological lesion in a pathological image, if the entire pathological image is used as input, problems such as long prediction time and difficulty in convergence occur due to large pathological image data and a weak supervision signal. Therefore, in related arts, patches are extracted from the pathological image, and a local patch is used as input, and the image processing model performs recognition and a prediction on the local patch, to combine recognition results of all local patches to obtain a final lesion recognition result of the pathological image, that is, multiple instance learning (MIL).

However, based on characteristics of multiple instance learning, because only one instance needs to be determined as a lesion, the entire pathological image is recognized as a lesion, and all instances need to be determined as non-lesions to determine that the entire pathological image is not a lesion. Therefore, in pathological image recognition, it is more likely to recognize a sample as a lesion. Therefore, there is a problem of low screening negative rate.

For the foregoing problems, in the embodiments of the present disclosure including the embodiments of both the claims and the specification (hereinafter referred to as "all embodiments of the present disclosure") provide a weakly supervised method for training an image processing model using local annotation. In the embodiments of the present disclosure, on the basis of weak supervision, a small quantity of patch-level/pixel-level labels are used for training the image processing model. This improves recognition accuracy of the image processing model. Therefore, a situation of the low screening negative rate is reduced.

The foregoing pathological image data and other image data are data actively uploaded by a user; or data obtained with separate authorization from the user. In the embodiments, pathological image recognition is used as an example for description. The method for training an image processing model according to the embodiments of the present disclosure may also be applied to another scenario. This is not limited.

Information (which includes but not limited to user device information, user personal information, and the like), data (which includes but not limited to data used for analysis, stored data, displayed data, and the like), and signals involved in the present disclosure are all separately authorized by the user or fully authorized by all parties, and collection, use, and processing of related data need to comply with relevant laws, regulations, and standards of relevant regions. For example, the pathological image data in the present disclosure is acquired under full authorization.

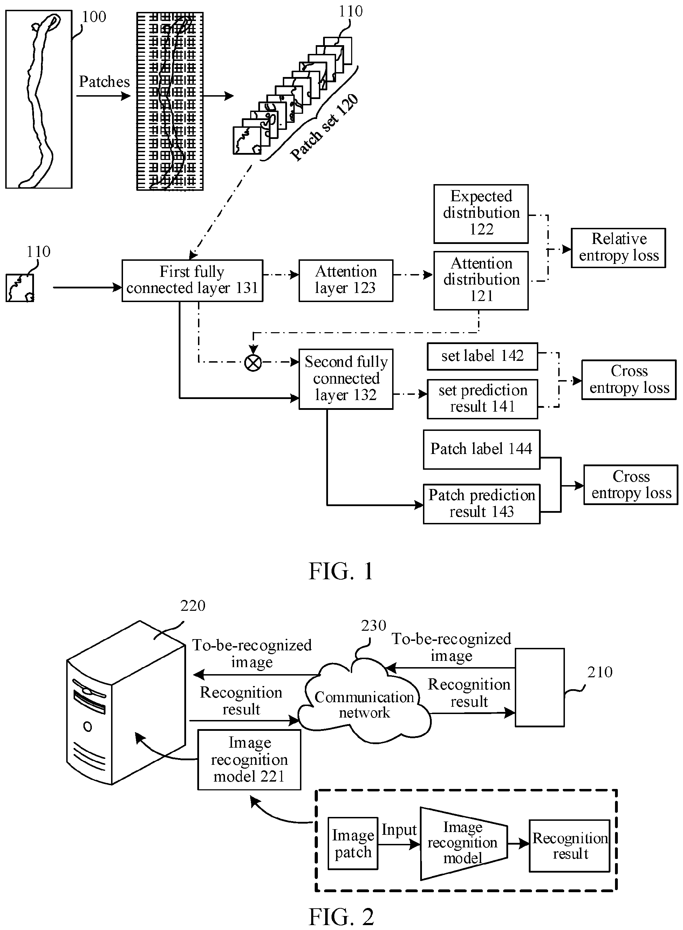

Embodiments of the present disclosure provide a weakly supervised method for training an image processing model using local annotation. FIG. 1 is a schematic diagram of a process for training an image processing model according to an exemplary embodiment of the present disclosure. As shown in FIG. 1, after a pathological image 100 is obtained, image patches 110 are extracted from the pathological image 100, and a patch set 120 is constituted of the image patches 110.

For the patch set 120, the following two parts of loss obtaining are included.

1. Relative entropy loss

The patch set 120 is inputted into a first fully connected layer 131 of the image processing model, and a set feature of the patch set 120 and patch features of the patches in the patch set 120 are outputted. Then, an attention distribution 121 of the patch set 120 is classified and predicted by an attention layer 123 according to the set feature and the patch features. The relative entropy loss is determined based on a difference between an expected distribution 122 corresponding to a set label labeled by the patch set 120 and the foregoing predicted attention distribution 121.

2. Cross entropy loss

After the patch set 120 is inputted to the first fully connected layer 131, output of the first fully connected layer 131 and a fused feature of the attention distribution 121 are used as input, and input to a second fully connected layer 132. Feature processing is performed on the fused feature by the second fully connected layer 132 to obtain a set prediction result 141. A cross entropy loss of the patch set 120 is determined based on the set prediction result 141 and a set label 142.

For the image patches 110, the following loss obtaining is included.

Cross entropy loss:

After the image patches 110 are inputted to the foregoing first fully connected layer 131, the output of the first fully connected layer 131 is used as input, and feature processing is performed by the second fully connected layer 132 to obtain a patch prediction result 143. A cross entropy loss of the image patches 110 is determined based on the patch prediction result 143 and a patch label 144.

The image processing model is trained based on the relative entropy loss and cross entropy loss of the patch set 120 and the cross entropy loss of the image patches 110.

Next, an implementation environment of embodiments of the present disclosure is described. For example, refer to FIG. 2. The implementation environment includes a terminal 210 and a server 220. The terminal 210 and the server 220 are connected via a communication network 230.

In all embodiments of the present disclosure, the terminal 210 is configured to send image data to the server 220. In all embodiments of the present disclosure, an application program with an image recognition function is installed in the terminal 210. For example, an application with an auxiliary diagnosis function is installed in the terminal 210. For example, a search engine program, a life assistance application, an instant messaging application, a video program, and a game program are installed in the terminal 210. This is not limited in the embodiments of the present disclosure.

An image processing model 221 is installed in the server 220. The image processing model 221 can recognize a large amount of pathological image data, and when a pathological image is recognized, a plurality of image patches are first extracted from the pathological image, and then the plurality of image patches are recognized to obtain recognition results, then the recognition results of the plurality of image patches are combined to obtain a recognition result corresponding to the pathological image.

During a training process of the image processing model 221, the image processing model 221 is trained by the following steps: extracting patches from a image and constituting the patches into a patch set; calculating a relative entropy loss and a cross entropy loss by the patch set; and calculating a cross entropy loss is by the image patches.

The foregoing terminal may be a mobile phone, a tablet computer, a desktop computer, a portable laptop, a smart TV, an on-board terminal, a smart home device, and other forms of terminal devices. This is not limited in the embodiments of the present disclosure.

The server may be an independent physical server, or a server cluster or distributed system including a plurality of physical servers, or a cloud server providing basic cloud computing services, such as a cloud service, a cloud database, cloud computing, a cloud function, cloud storage, a network service, cloud communication, a middleware service, a domain name service, a security service, a content delivery network (CDN), big data, and an artificial intelligence platform.

Cloud technology refers to a hosting technology that integrates resources, such as hardware, software, and a network, to implement data computing, storage, processing, and sharing in a wide area network or local area network. In all embodiments of the present disclosure, the foregoing server may alternatively be implemented as a node in a blockchain system.

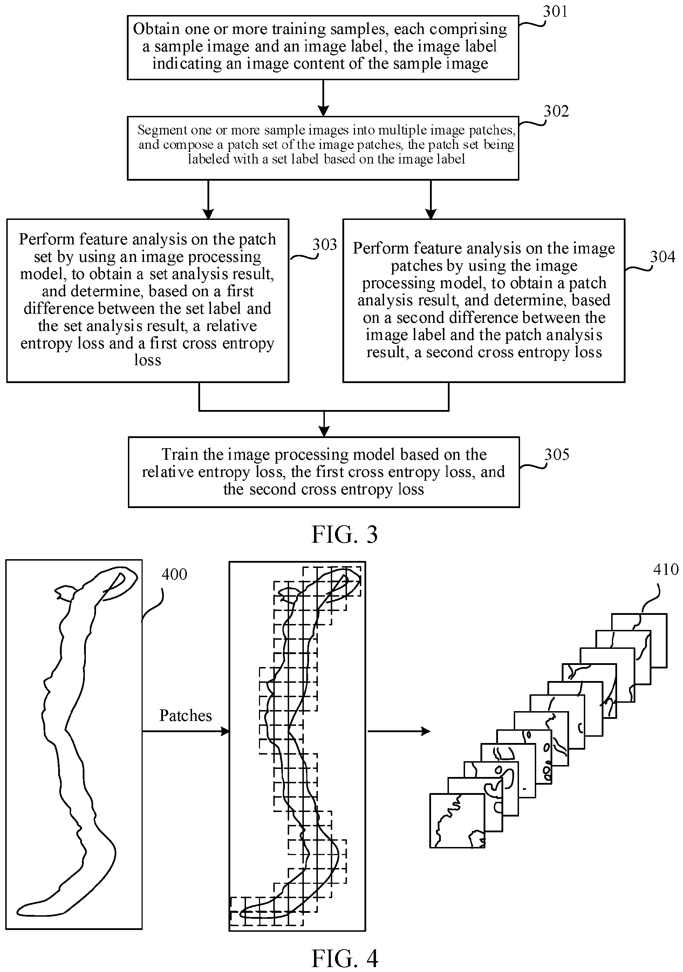

In combination with the term introduction and the application scenario above, the following describes a method for training an image processing model. The method may be performed by a server or a terminal, or may be performed by a server and a terminal together. In this embodiment of the present disclosure, an example in which the method is performed by a server is described. As shown in FIG. 3, the method includes the following steps.

Step 301: Obtain one or more training samples each comprising a sample image and an image label, the image label indicating an image content of the sample image.

The image label indicates an inclusion of image content in the image.

For example, in a case that the image is implemented as a pathological image, the image label indicates an inclusion of a lesion part in the pathological image, and in a case that the pathological image includes a lesion part, the image label also indicates an image region where the lesion part is located in the pathological image.

In a case that the image is implemented as a traffic acquisition image, the image label indicates an inclusion of a transportation in the traffic acquisition image, and in a case that the traffic acquisition image includes a transportation, the image label also indicates an identifier of the transportation in the traffic acquisition image, such as a license plate number of a vehicle in the traffic acquisition image. The traffic acquisition image refers to an image acquired by a traffic camera device.

In a case that hen the image is implemented as a home video image, the image label indicates an inclusion of a creature in the home video image, and in a case that the home video image includes a creature, the image label also indicates a type of the creature in the home video image, for example, the home video image includes a pet (a cat).

In all embodiments of the present disclosure, image types of the images in the one or more samples are the same, for example, the images are all pathological images. Alternatively, image types of the images in the one or more samples are different, for example, some of the images are pathological images, and some of the images are traffic acquisition images.

In all embodiments of the present disclosure, the one or more samples is an image set obtained from a public data set, or the one or more samples is an image set including image data authorized and uploaded by a user. This is not limited in this embodiment.

The image label labeled on the image may be labeled in the following manners. After a sample acquisition personnel acquires the image, the personnel distinguishes image content in the image and labels the image. For example, in a case that the image is implemented as a pathological image, an image diagnosed and labeled by a doctor is obtained, the pathological image is labeled based on a diagnosis result of the doctor, and in a case that the pathological image is positive, in other words, there is a lesion region in the pathological image, the lesion region is labeled based on the diagnosis of the doctor. Alternatively, the image is inputted to a pre-trained recognition model, and a prediction result is outputted as a image label. In this case, the image label is implemented as a pseudo label.

To be specific, taking a pathological image as an example, in a case that the pathological image is negative, in other words, there is no lesion region in the pathological image, an overall label of the pathological image is labeled as "negative". In a case that the pathological image is positive, in other words, there is a lesion region in the pathological image, an overall label of the pathological image is labeled as "positive", and an image region in the pathological image that includes the lesion region is labeled.

Step 302: Segment one or more sample images into multiple image patches, and compose a patch set of the image patches, the patch set being labeled with a set label based on the image label.

The patch set is labeled with a set label corresponding to the image label, and the image patches are obtained by segmenting an image region of the image.

Taking a pathological image as an example, patches are extracted from the pathological image and a local patch is inferred, and inference results of all local patches are combined to obtain a final inference result of the entire pathological image. Multi-instance learning regards a patch as an instance and a pathological image as a set, in other words, a set includes a plurality of instances. If there is an instance determined as positive, the entire set is positive. On the contrary, if all instances are determined as negative, the set is negative. In this embodiment of the present disclosure, all instances included in the set come from the same pathological image, or from different pathological images.

In all embodiments of the present disclosure, **that the segmenting an image region of the image** includes at least one of the following manners.

First, the entire image is segmented into equal sizes to obtain image patches with consistent image sizes. For a image patch at an edge position, an edge with an insufficient size is filled in the form of blanks, so that an edge sample patch that is consistent in size with other sample patches is obtained.

For example, FIG. 4 is a schematic diagram of a process of extracting patches from an image according to an exemplary embodiment of the present disclosure. As shown in FIG. 4, a image 400 is segmented into equal sizes, and edge positions are filled with blanks, so that image patches 410 corresponding to the image 400 are obtained.

Second, a middle region of the image is segmented into equal sizes to obtain image patches with consistent image sizes. Image patches within a image range and satisfy the image size are cropped starting from an edge position of the image, and image parts not acquired are discarded.

Third, a minimum rectangular range including the image is determined as a sample extended image. The sample extended image is segmented into equal sizes to obtain candidate sample patches, and candidate sample patches that do not have image content in the candidate sample patches are discarded, and retained candidate sample patches are image patches.

The foregoing manners of segmenting the sample patches is only a schematic example, and the manners of obtaining sample patches are not limited in this embodiment of the present disclosure.

In all embodiments of the present disclosure, after the image is segmented into the image patches, **and the patch set is constituted**, at least one of the following cases is included.

> **(1)** Image patches belonging to the same image are summarized into the same patch set, and patch sets respectively corresponding to each image are obtained.

The image label labeled on the image is a set label corresponding to the patch set. For example, if the image is labeled as "negative", the patch set is also labeled as "negative"; if the image is labeled as "positive", the patch set is also labeled as "positive". An inclusion of image content in each image patch obtained by segmenting the image is determined correspondingly according to a region where labeled image content in the image is located, and patch labels are labeled for the image patches. For example, if the image is labeled with a region where an image is located as region 1 in the image, in a case that a image patch a includes the entire or a part of the region 1, it is considered that the image patch a includes image content.

In all embodiments of the present disclosure, if the image label of the image indicates that image content is not included in the image, the patch set only needs the set label used for indicating that the image content is not included in the patch set, without further labeling the patch label for the image patches.

In a case that the image patch includes the image content, the patch label of the image patch may be category-level or pixel-level. In a case that the patch label is category-level, in other words, the patch label indicates whether the image patch includes the image content. For example, "positive" or "negative" is labeled for a image patch of a pathological image. In one embodiment, if the image patch includes image content, the patch label is "P", that is, positive; if the image patch does not include image content, the patch label is "N", that is, negative. If the patch label is pixel-level, the patch label indicates a position of image content in the image patch. For example, the image content fills the image patch, or the image content is located in a region 2 of the image patch. In all embodiments of the present disclosure, the pixel-level label may also indicate a pixel proportion of the image content in the image patch, for example, a proportion of a quantity of pixels in the region 2 to a total quantity of pixels in the image patch.

**(2)** After each image is segmented into image patches, a patch set of the image patches is obtained, n image patches are randomly obtained from the patch set to constitute a patch set, and n is a preset positive integer.

In other words, image patches in the same patch set come from the same or different images.

Then a set label of the patch set is determined based on patch labels corresponding to the image patches. Alternatively, a set label of the patch set is determined based on a image label of a source image of the image patches. For example, if the image label of the image from which the image patches come indicates that there is no image content, the image patches do not include the image content, and the set label of the patch set indicates that the image content is not included.

If the image from which the image patches come includes the image content, the set label of the patch set needs to be determined based on the patch labels. Taking a pathological image as an example, to be specific, if patch labels of all image patches are "negative", a set label of a patch set is "negative"; if patch labels of the image patches in a patch set are "positive", then a set label of the patch set is "positive".

Because there is a label for the image, and the label indicates an inclusion of image content in the image, after a region of the image is segmented, the patch labels of the image patches are determined based on the image label of the image. For example, taking a pathological image as an example, if a image label of a image is "negative", patch labels of all image patches are "negative"; if a image label of a image is "positive", whether the image patches are "negative" or "positive" is determined based on a position of an image region labeled on the image.

**(3)** Image patches belonging to the same image are summarized into the same patch set, and n image patches are randomly obtained from a patch set to constitute a patch set. In other words, the patch set includes both image patches obtained by segmenting the same image, and image patches obtained by segmenting different images.

Step 303: Perform feature analysis on the patch set by using an image processing model, to obtain a set analysis result, and determine, based on a first difference between the set label and the set analysis result, a relative entropy loss and a first cross entropy loss.

In all embodiments of the present disclosure, an attention distribution is predicted based on the image content in the patch set, and an expected distribution corresponding to the set label of the patch set is determined. The relative entropy loss is a loss determined based on a difference between the attention distribution and the expected distribution. In other words, after feature extraction is performed on the patch set by using the image processing model, a distribution of the extracted feature is analyzed, so that the attention distribution of the image content in the patch set is obtained, and the patch set is labeled with a set label. The set label indicates the expected distribution corresponding to the patch set. Then the relative entropy loss of the patch set is determined based on the difference between the attention distribution and the expected distribution. In other words, feature extraction is performed on the patch set by using the image processing model to obtain a set feature, and the relative entropy loss corresponding to the patch set is determined based on the attention distribution corresponding to the set feature and the expected distribution corresponding to the set label.

In all embodiments of the present disclosure, a prediction result is obtained based on analysis of the image content in the patch set, and the first cross entropy loss is a loss determined based on a difference between the prediction result and the set label of the patch set. In other words, after feature extraction is performed on the patch set by using the image processing model, image content of the extracted feature is analyzed, so that a predicted inclusion of the image content in the patch set is obtained, and the first cross entropy loss of the patch set is determined based on a difference between the predicted inclusion and an inclusion represented by the set label. In other words, the first cross entropy loss corresponding to the patch set is determined based on a difference between a recognition result of image content recognition of the set feature and the set label.

After the patch set is obtained, the relative entropy loss and the first cross entropy loss corresponding to the patch set are determined based on the set feature and the set label. The relative entropy loss may be used to better measure an amount of information lost between the attention distribution corresponding to the set feature and the expected distribution corresponding to the set label. The first cross entropy loss may be used to better determine closeness between an actual output recognition result and an expected output set label. The relative entropy loss represented the loss of information and the first cross entropy loss represented the closeness are combined to implement more comprehensive analysis of the constituted patch set.

Step 304: Perform feature analysis on the image patches by using the image processing model, to obtain a patch analysis result, and determine, based on a second difference between the image label and the patch analysis result, a second cross entropy loss.

In all embodiments of the present disclosure, a prediction result is obtained based on analysis of the image content in the image patches, and the second cross entropy loss is a loss determined based on a difference between the prediction result and the patch labels of the image patches. The patch label may be a image label of the image, or may be a patch label inferred based on the image label.

In other words, after feature extraction is performed on the image patch by using the image processing model, image content of the extracted feature is analyzed, so that an inclusion of the image content in the image patch is obtained, and the second cross entropy loss of the image patch is determined based on a difference between the predicted inclusion and an inclusion represented by the patch label.

Step 303 and step 304 are two parallel steps. Step 303 may be performed first and then step 304, step 304 may be performed first and then step 303, or step 303 and step 304 may be performed at the same time. This is not limited in this embodiment.

Step 305: Train the image processing model based on the relative entropy loss, the first cross entropy loss, and the second cross entropy loss.

In all embodiments of the present disclosure, the relative entropy loss, the first cross entropy loss, and the second cross entropy loss are fused to obtain a total loss, so that the image processing model is trained based on the total loss.

In one embodiment, in a case that the relative entropy loss, the first cross entropy loss, and the second cross entropy loss are fused, the relative entropy loss, the first cross entropy loss, and the second cross entropy loss are weighted and fused using respective weights. A weighted sum of the relative entropy loss, the first cross entropy loss, and the second cross entropy loss is calculated to obtain a total loss value.

In a case that the total loss value for training the image processing model is determined, proportions of different losses in the total loss value can be adjusted with the help of weights that represent relative importance of different losses in the total loss value, to obtain a total loss that can better reflect an overall feature of a image patch set. While impacts of different losses are comprehensively considered, a more accurate total loss value is obtained as much as possible to implement a more robust training for the image processing model.

In one embodiment, in a case that the image processing model is trained based on the total loss value, a model parameter of the image processing model is adjusted based on a gradient descent method.

In this embodiment, an initial learning rate of 1 e-3 is used, and a change of the learning rate is controlled by a cosine annealing policy. In addition, an Adam optimizer is used to adjust the model parameter using the gradient descent method to make a model parameter training effect of the image processing model converge.

In one embodiment, in a case that the model parameter of the image processing model is adjusted, parameters in a first fully connected layer and a second fully connected layer in the image processing model are adjusted according to the total loss value. In one embodiment, parameters in another network layer in the image processing model may alternatively be adjusted based on the total loss value.

In conclusion, according to the method in this embodiment, during a training process of an image processing model, for an image that requires patch recognition, the image processing model is trained using image patches and a patch set separately. While overall accuracy of recognizing the image is improved, accuracy of recognizing image content in the image patches is also improved. This not only avoids a problem of an erroneous recognition result of the entire image due to incorrect recognition of a single image patch, but also increases a screening negative rate when the image processing model is used to recognize a pathological lesion in a pathological image, to improve efficiency and accuracy of lesion recognition.

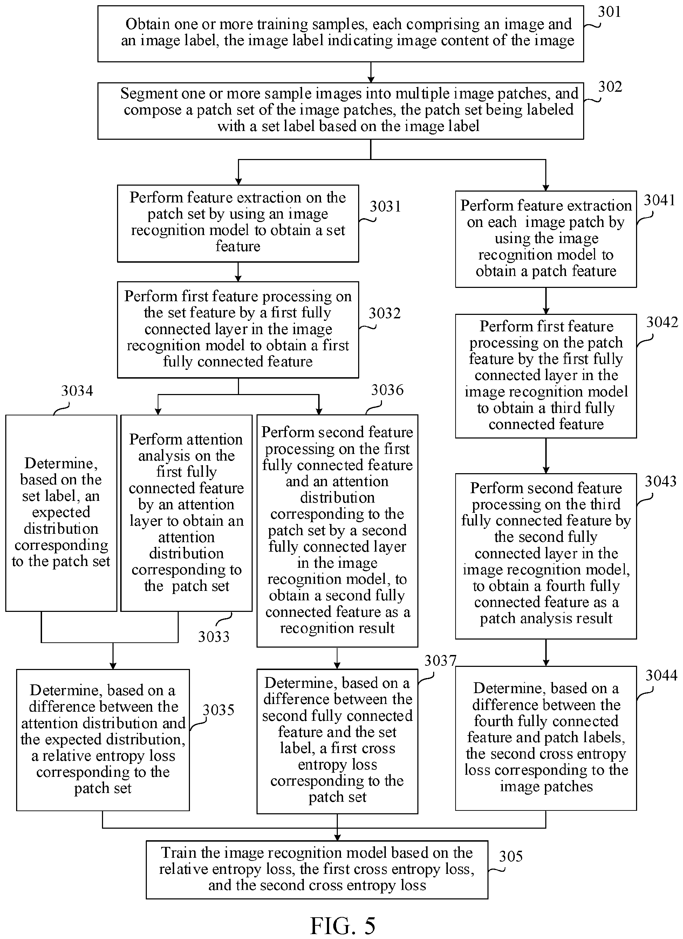

In an optional embodiment, the image processing model includes a first fully connected layer and a second fully connected layer. The foregoing relative entropy loss and cross entropy loss are determined based on the fully connected layer. FIG. 5 is a flowchart of a method for training an image processing model according to another exemplary embodiment of the present disclosure. The method may be performed by a server or a terminal, or may be performed by a server and a terminal together. In this embodiment of the present disclosure, an example in which the method is performed by a server is described. As shown in FIG. 5, steps 303 and 304 may be implemented as the following steps.

Step 3031: Perform feature extraction on the patch set by using an image processing model to obtain a set feature.

In all embodiments of the present disclosure, feature extraction is performed on the patch set by a feature extraction layer in the image processing model to obtain the set feature. In one embodiment, feature extraction is performed on each image patch in the patch set by the feature extraction layer to obtain a patch feature, so that the set feature constituted of patch features is determined, and the set feature is a set of the patch features.

In this embodiment, an example in which the feature extraction layer is implemented as a component of the image processing model is used for description. In all embodiments of the present disclosure, the feature extraction layer may alternatively be implemented as an independent feature extraction network. This is not limited in this embodiment.

In all embodiments of the present disclosure, the feature extraction layer upsamples/downsamples each image patch in the patch set via a convolution operation to obtain the patch feature, and the set feature is constituted based on integration of the patch features.

Step 3032: Perform first feature processing on the set feature by a first fully connected layer in the image processing model to obtain a first fully connected feature.

The image processing model includes the first fully connected layer. Each node in a fully connected layer is connected to all nodes in a previous layer to combine the foregoing extracted features. A fully connected layer (FC) plays a role of "classifier" in a convolutional neural network.

The set feature is inputted to the first fully connected layer, and the set feature is classified by the first fully connected layer, to output the first fully connected feature. The first fully connected feature represents relationships between the set feature and each classification item after recognition by the first fully connected layer. For example, if the classification item includes both positive and negative items, the first fully connected feature represents preliminary recognition results of the set feature corresponding to a positive classification and a negative classification after processing by the first fully connected layer. In all embodiments of the present disclosure, the fully connected layer is used for initially screening a feature belonging to a positive classification and a feature belonging to a negative classification from the set feature.

Step 3033: Perform attention analysis on the first fully connected feature by an attention layer to obtain an attention distribution corresponding to the patch set.

An attention mechanism originates from a study of human vision. In cognitive science, due to an information processing bottleneck, a human being selectively focuses on a part of all information while ignoring other visible information. The foregoing mechanism is often referred to as an attention mechanism. Different parts of a retina of a human being have different levels of information processing capabilities, that is, acuity, and only a fovea has the strongest acuity. To properly utilize limited visual information processing resources, a human being needs to select a specific part of a visual region and then focus on the part.

To be specific, the foregoing attention layer applies the attention mechanism to selectively focus on a feature belonging to the positive classification or the negative classification in the first fully connected feature, so that the attention distribution corresponding to the patch set is obtained.

In all embodiments of the present disclosure, output of the attention layer is classified and predicted to obtain an attention distribution of the first fully connected feature corresponding to a classification item.

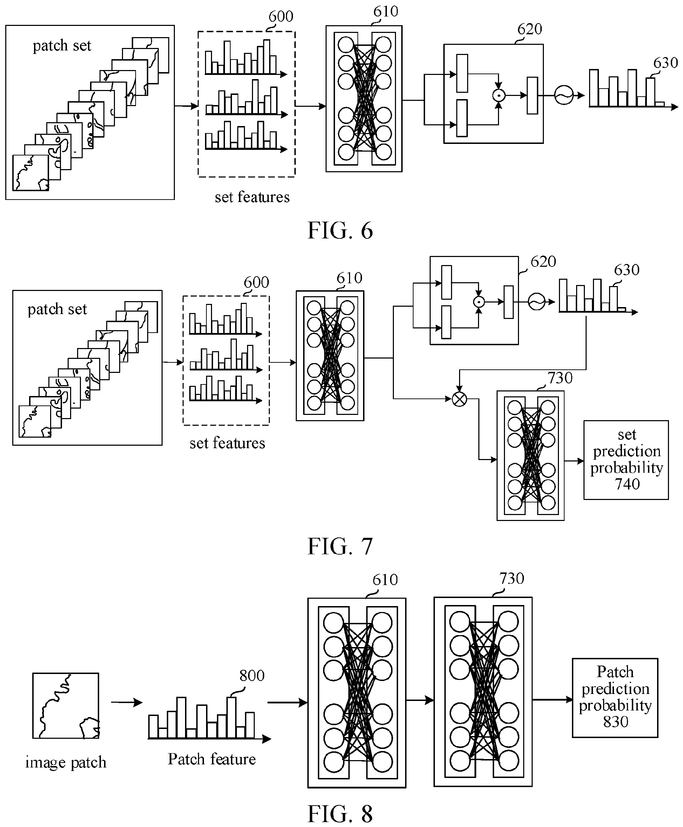

For example, as shown in FIG. 6, after set features 600 corresponding to the patch set are obtained, the set features 600 are inputted to a first fully connected layer 610, and output of the first fully connected layer 610 is used as input, attention analysis is performed by an attention layer 620, and output of the attention layer 620 is classified and predicted to obtain an attention distribution 630 corresponding to the patch set.

Step 3034: Determine, based on the set label, an expected distribution corresponding to the patch set.

A manner of obtaining the set label is described in step 302. Details are not described herein again.

In all embodiments of the present disclosure, **in** a case **that the expected distribution corresponding to the patch** set is **determined based on the set label**, at least one of the following cases is included.

**1.** The expected distribution of the patch set is determined, in response to the set label indicating that the image content does not exist in the image patches in the patch set, as a uniform distribution.

The set label indicates that the image patches in the patch set do not have the image content. An example in which the image is used as a pathological image, the set label indicates that the patch set is negative. Then the expected distribution corresponding to the patch set is the uniform distribution.

Because the set label indicates that no image content exists in the patch set, that any image patch in the patch set does not include the image content can be obtained. Therefore, in this case, no patch-level patch label is needed to determine the expected distribution corresponding to the patch set.

**2.** A patch label corresponding to the image patches is obtained in the set label in response to the set label indicating that the image content exists in the image patches in the patch set, and the expected distribution of the patch set is determined based on the patch labels.

The patch set has a patch-level label, in other words, the image patches in the patch set include patch labels. The patch labels indicate an inclusion of the image content in the image patches, and the patch labels are determined based on a image label of the image. The specific determining method is described in step 302 and is not described herein again.

The patch-level label of the patch set also includes at least one of the following cases.

**2.1.** The expected distribution of the patch set is determined, in response to the patch labels including classification labels, based on classification labels corresponding to the image patches, each classification label has a corresponding expected distribution of an instance.

The patch-level label is a classification label, in other words, the patch labels of the image patches indicate whether the image patches include the image content, but does not specifically indicate a specific position of the image content. Then in the expected distribution corresponding to the patch set: An expected distribution corresponding to a image patch with image content is 1/p. p represents a total quantity of image patches with the image content in the patch set. An expected distribution corresponding to a image patch without image content is zero.

An example in which a pathological image is used for description, an expected distribution corresponding to a image patch with a positive patch label is 1/p, and an expected distribution corresponding to a image patch with a negative patch label is zero, so that an expected distribution corresponding to an entire patch set is obtained.

**2.2.** The expected distribution of the patch set is determined, in response to the patch labels including the pixel distribution labels, based on distributions labeled by the pixel distribution labels each pixel distribution label is used for regionally labeling pixel content in the image patches.

The patch-level label is a pixel-level label, in other words, the patch labels of the image patches indicate whether the image patches include the image content, if the image patches include the image content, the patch labels also indicate a pixel position of the image content in the image patches. Then in the expected distribution corresponding to the patch set: An expected distribution corresponding to all image patches is a proportion of pixels corresponding to the image content to the total pixels, and the expected distribution of all image patches is normalized to obtain the expected distribution of the patch set. The proportion of pixels corresponding to the image content to the total pixels refers to a proportion of the pixels corresponding to the image content in the image patches to the total pixels of the image patches. Results are different for different image patch proportions, for example, a proportion of some image patches is 100%, and a proportion of some image patches is 0% (where a patch label is negative). In a case that proportions of all image patches are normalized, the proportions of all image patches may be averaged, and the average of the proportions of all image patches in the patch set is used as the expected distribution of the patch set.

In this embodiment, labeling levels of patch labels corresponding to image patches in the same patch set are the same. In other words, patch labels corresponding to image patches in the same patch set are all classification labels. Alternatively, patch labels corresponding to image patches in the same patch set are all pixel-level labels.

A specific distribution state of the expected distribution is determined according to an inclusion of image content represented by the set label in the image patches in the patch set, so that a distribution result of the expected distribution can be more accurately determined based on an analysis result of the inclusion. If the image content exists in the image patches, the expected distribution is a uniform distribution to more intuitively represent that patch label states of the image patches in the patch set are uniform. If the image content exists in the image patches, it means that the patch label states of the image patches in the patch set may be different. From this, deeper analysis of the expected distribution can be performed based on the patch labels, to obtain a more realistic reflection of the expected distribution of the image patches in the patch set from a plurality of angles, so that accuracy of the relative entropy loss determined based on the expected distribution is improved.

In addition, in a case that the expected distribution of the patch set is determined based on the patch label, a label type of the patch label is first determined, and then a distribution indicated by a corresponding label type is used for determining the expected distribution corresponding to the patch set. The expected distribution of the patch set can be determined more flexibly based on a difference between a classification label and a pixel distribution label.

Step 3035: Determine, based on a difference between the attention distribution and the expected distribution, the relative entropy loss corresponding to the patch set.

In one embodiment, after the attention distribution and the expected distribution are determined, the difference between the attention distribution and the expected distribution is determined, so that the relative entropy loss corresponding to the patch set is obtained. The relative entropy loss is calculated as shown in formula 1 below.

Formula 1:

$$\mathcal{L}_{kld}\left(w, \widetilde{w_l}\right) = - \Sigma_i \widetilde{w_l} log\left(\frac{e^{w_i}}{\Sigma_j w_j}\right) + \Sigma_i \widetilde{w}_l log \widetilde{w}_l$$

w represents a weight distribution of an attention output by a network after being transformed by a classification layer, and $\widetilde{w_l}$ represents a given standard distribution. i represents an $i^{th}$ image patch in the patch set, and j represents a total quantity of image patches in the patch set.

In steps 3032 to 3035, the determining of the attention distribution and the expected distribution corresponding to the patch set is described, so that the relative entropy loss of the patch set is determined. During feature processing and attention analysis processes of the image processing model, a deep exploration of an image region of focus is performed on the basis of avoiding an interference of redundant information, to determine a more targeted attention distribution. In addition, an expected distribution that better represents an integrity is determined based on the inclusion of the image content in the image patches in the patch set, so that a more accurate relative entropy loss can be obtained based on the difference between the attention distribution and the expected distribution.

Step 3036: Perform second feature processing on the first fully connected feature and an attention distribution corresponding to the patch set by a second fully connected layer in the image processing model, to obtain a second fully connected feature as a recognition result.

The foregoing content is a process of determining a loss value based on the attention distribution of the patch set. In addition, this embodiment of the present disclosure also includes a process of determining a cross entropy loss value based on a recognition result of the image content in the patch set.

In all embodiments of the present disclosure, feature fusion is performed on the foregoing first fully connected feature and the attention distribution corresponding to the patch set, and a fused feature is inputted to the second fully connected layer. In all embodiments of the present disclosure, the first fully connected feature and the attention distribution are weighted and summed, and a weighted summation result is inputted to the second fully connected layer for a probability prediction. In one embodiment, a value calculated via a classification function based on output of the second fully connected layer is used as a prediction probability of a corresponding category of the patch set.

For example, an example in which a pathological image is used, after the fused feature of the first fully connected feature and the attention distribution is inputted to the second fully connected layer, a corresponding positive probability and a corresponding negative probability of the patch set are outputted as the second fully connected feature, so that a classification with a high probability is used as a recognition result corresponding to the patch set.

For example, as shown in FIG. 7, after set features 600 corresponding to the patch set are obtained, the set features 600 are inputted to a first fully connected layer 610, and output of the first fully connected layer 610 and an attention distribution feature 630 are used as input, feature analysis is performed by a second fully connected layer 730, so that a set prediction probability 740 is outputted.

Step 3037: Determine, based on a difference between the second fully connected feature and the set label, the first cross entropy loss corresponding to the patch set.

In one embodiment, the first cross entropy loss corresponding to the patch set is determined by using formula 2 below.

Formula 2:

$$\mathcal{L}_{ce}(p, \varphi(B)) = -\Sigma_i \varphi(B, i) log(p_i)$$

p represents a predicted probability, $\varphi(B)$ represents a pre-labeled set label, and i represents an $i^{th}$ patch set.

In steps 3036 and 3037, the obtaining the first cross entropy loss based on the second fully connected feature and the set label is described. In a case that the recognition result is obtained based on the second fully connected layer in the image processing model, the set feature outputted by the first fully connected layer and the attention distribution corresponding to the patch set are combined, and a deep exploration of a region of focus indicated by the attention distribution is performed on the basis of analyzing the entire patch set. This makes the second fully connected feature more accurate after feature processing, and improves accuracy of the first cross entropy loss in a case that the first cross entropy loss based is calculated on the set label.

Step 3041: Perform feature extraction on each image patch by using the image processing model to obtain a patch feature.

In all embodiments of the present disclosure, the feature extraction is performed on each image patch by a feature extraction layer in the image processing model to obtain the patch feature.

In this embodiment, an example in which the feature extraction layer is implemented as a component of the image processing model is used for description. In all embodiments of the present disclosure, the feature extraction layer may alternatively be implemented as an independent feature extraction network. This is not limited in this embodiment.

In all embodiments of the present disclosure, the feature extraction layer upsamples/downsamples each image patch via a convolution operation to obtain the patch feature.

Step 3042: Perform first feature processing on the patch feature by the first fully connected layer in the image processing model to obtain a third fully connected feature.

The image processing model includes the first fully connected layer, the patch feature is inputted to the first fully connected layer, and the patch feature is classified by the first fully connected layer, to output the third fully connected feature. The third fully connected feature represents relationships between the patch feature and each classification item after recognition by the first fully connected layer. For example, if the classification item includes both positive and negative items, the third fully connected feature represents preliminary recognition results of the patch feature corresponding to a positive classification and a negative classification after processing by the first fully connected layer. In all embodiments of the present disclosure, the fully connected layer is used for initially screening a feature belonging to a positive classification and a feature belonging to a negative classification from the patch feature.

Step 3043: Perform second feature processing on the third fully connected feature by the second fully connected layer in the image processing model, to obtain a fourth fully connected feature as a patch analysis result.

In all embodiments of the present disclosure, the third fully connected feature is inputted to the second fully connected layer, a value calculated via a classification function based on output of the second fully connected layer is used as a prediction probability of a corresponding category of the image patch.

For example, an example in which a pathological image is used for description, after the third fully connected feature is inputted to the second fully connected layer, a corresponding positive probability and a corresponding negative probability of the image patch are outputted as the fourth fully connected feature, so that a classification with a high probability is used as a recognition result corresponding to the image patch.

For example, as shown in FIG. 8, after a patch feature 800 corresponding to a image patch is obtained, the patch feature 800 is inputted to a first fully connected layer 610, and output of the first fully connected layer 610 is used as input, feature analysis is performed by a second fully connected layer 730, so that a patch prediction probability 830 is outputted.

Step 3044: Determine, based on a difference between the fourth fully connected feature and the patch labels, the second cross entropy loss corresponding to the image patches.

In one embodiment, the second cross entropy loss may be calculated with reference to formula 2.

It is inferred that a single patch shares the same fully connected layer with an inference set, and an inference result is similar to a set-level prediction, a label constraint of a single patch is accepted, and a direction of gradient descent of a network parameter is pointed out based on a backpropagation of a cross entropy loss.

In one embodiment, a patch label is obtained in the following manners. (1) A patch label is obtained directly from a patch-level label. (2) If a patch label is a pixel-level label, a positive pixel area of the patch is higher than a certain threshold, the patch is considered to be positive; if all pixels in the patch are negative, the patch is considered to be negative; and in other cases, a positive signal of the patch is considered not strong enough, and such patch is discarded and not used for supervision of a patch classification. (3) If the patch comes from a negative image, the patch is considered to be negative. (4) For a positive image, if a prediction result of a model is correct and has high confidence, then k patches with the greatest corresponding values of an outputted attention layer are extracted as positive patches; and k patches with the smallest corresponding values are extracted as negative patches.

In steps 3041 and 3044, the feature extraction based on the image patches and determining of the second cross entropy loss are described. The patch features are obtained after feature extraction of the image patches. In addition to performing feature processing on the set feature, the first fully connected layer in the image processing model also processes the patch features and obtains the third fully connected feature. In addition to performing feature processing on the first fully connected feature corresponding to the set feature, the second fully connected layer in the image processing model also processes the third fully connected feature and obtains the fourth fully connected feature. In other words, the image processing model not only analyzes the constituted set feature of the patch set from an overall perspective, but also analyzes the patch features corresponding to the image patches from a local perspective. Therefore, the first cross entropy loss corresponding to the patch set can be determined, in addition, the second cross entropy loss corresponding to the image patches can be used to implement a robust process for training the image processing model.

Step 305: Train the image processing model based on the relative entropy loss, the first cross entropy loss, and the second cross entropy loss.

In one embodiment, the relative entropy loss, the first cross entropy loss, and the second cross entropy loss are weighted and fused to obtain a total loss value, and the image processing model is trained based on the total loss value.

For example, the total loss value is calculated as shown in formula 3 below.

Formula 3:

$$\mathcal{L}_{total} = \lambda_1 \mathcal{L}_{ce}(p, \varphi(B)) + \lambda_2 \mathcal{L}_{ce}(p, \varphi(I)) + \lambda_3 \mathcal{L}_{kld}(w, \widetilde{w})$$

$\lambda_1$ is a weight value corresponding to the first cross entropy loss, $\lambda_2$ is a weight value corresponding to the second cross entropy loss, $\lambda_3$ is a weight value corresponding to the relative entropy loss, and $\varphi(I)$ is a patch label corresponding to a image patch.

In this embodiment of the present disclosure, a training set includes two parts: a image and a patch. Both the image and patch include labels of respective classifications.

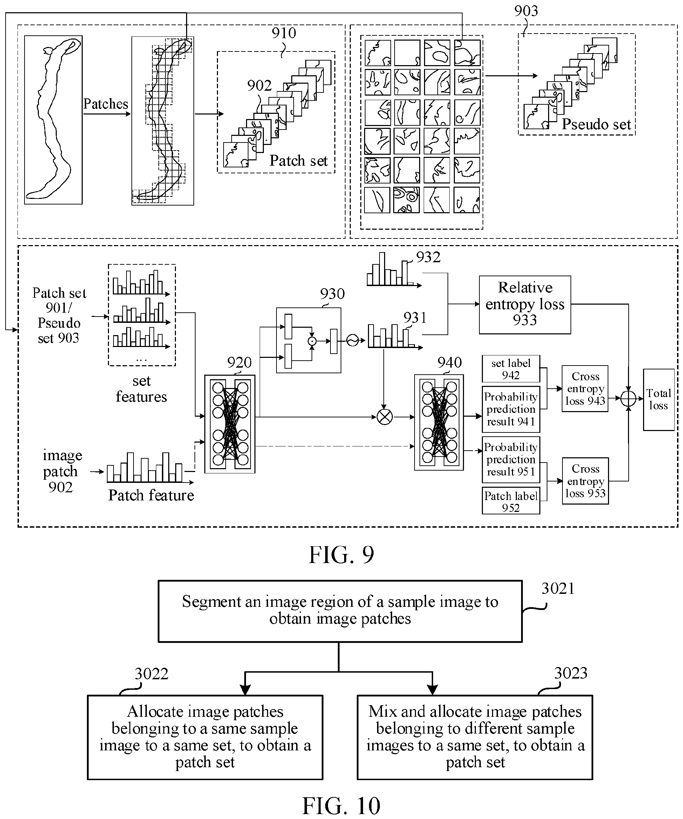

For example, as shown in FIG. 9, during training, input of a model includes three parts: a patch set 901, patches 902, and a pseudo set 903 (that is, a set randomly combined by patches) obtained by segmenting a image. A calculation process of a loss value in this embodiment mainly includes the following stages.

(1) Stage of calculating a relative entropy loss

For a patch set 910 obtained by segmenting a image, such as the foregoing patch set 901 corresponding to the image or the foregoing pseudo set 903, training data is inputted into a network, and after feature analysis is performed by a first fully connected layer 920, a weighted aggregation feature is outputted based on an attention layer 930 to obtain an attention distribution 931, an expected distribution 932 is obtained based on a label labeling by the image, and a relative entropy loss 933 is obtained based on the attention distribution 931 and the expected distribution 932.

(2) Stage of calculating a cross entropy loss of a set

For the patch set 910 obtained by segmenting the image, such as the foregoing patch set 901 corresponding to the image or the foregoing pseudo set 903, training data is inputted into a network, and after feature analysis is performed by the first fully connected layer 920, feature analysis is performed by a second fully connected layer 940, and a probability prediction result 941 corresponding to a classification category of the patch set 910 is obtained, so that a cross entropy loss 943 of the set is obtained based on a difference between a set label 942 and the probability prediction result 941.

(3) Stage of calculating a cross entropy loss of a patch

For the image patches 902 obtained by segmenting the image, training data is inputted into a network, and after feature analysis is performed by the first fully connected layer 920, feature analysis is performed by a second fully connected layer 940, and a probability prediction result 951 corresponding to a classification category of the image patches 902 is obtained, so that a cross entropy loss 953 of the image patches is obtained based on a difference between a patch label 952 and the probability prediction result 951.

In conclusion, according to the method in this embodiment, during a training process of an image processing model, for an image that requires patch recognition, the image processing model is trained using image patches and a patch set separately. While overall accuracy of recognizing the image is improved, accuracy of recognizing image content in the image patches is also improved. This not only avoids a problem of an erroneous recognition result of the entire image due to incorrect recognition of a single image patch, but also increases a screening negative rate when the image processing model is used to recognize a pathological lesion in a pathological image, to improve efficiency and accuracy of lesion recognition.

In the method according to this embodiment, in a case that image patches in a patch set are all negative, a distribution of the patch set is directly determined as a uniform distribution. In a case that a image patch in the patch set is positive, an expected distribution is determined based on a patch label of the image patch. This improves efficiency for determining the expected distribution, and improves efficiency for training a model.

In the method according to this embodiment, a relative entropy loss and a cross entropy loss are determined respectively for the patch set, and a cross entropy loss is determined for the image patches. This adds a dimension for training the model in a weak supervision manner, improves accuracy for training the model, and improves an adaptability of the model.

In an optional embodiment, a patch set may be divided by an image or randomly. FIG. 10 is a flowchart of a method for training an image processing model according to still another exemplary embodiment of the present disclosure. As shown in FIG. 10, step 302 may alternatively be implemented as the following steps.

Step 3021: Segment an image region of the image to obtain the image patches.

In one embodiment, a manner of segmenting an image region of the image is described in step 302. Details are not described herein again.

Step 3022: Allocate image patches belonging to a same image to a same set to obtain the patch set.

In all embodiments of the present disclosure, all image patches belonging to the same image are allocated to the same set to obtain the patch set; or some image patches belonging to the same image are allocated to the same set.

<u>In a case that some image patches are allocated to the same set</u>, at least one of the following cases is included.

1. n image patches are randomly selected from the image patches of the image and are allocated to the same set. In a case that this allocation method is used, a label corresponding to the image indicates that the image does not include image content.

2. n image patches are selected from a selected position region of the image and are allocated to the same set. For example, n sequentially adjacent image patches are selected starting from a middle position of the image and are allocated to the same set. Alternatively, some image patches from regions respectively corresponding to different classifications in the image are selected and are allocated to the same set, the regions respectively corresponding to different classifications are determined based on region labels labeled in the image.

3. n image patches are skip-selected from the image patches of the image and are allocated to the same set.

In other words, one of every two adjacent image patches is selected and allocated to the same set.

The foregoing allocation manners of the patch set are only schematic examples and are not limited in this embodiment.

In one embodiment, a image label corresponding to the image is used, in response to image patches in the patch set belonging to a same image, as a set label corresponding to the patch set.

Step 3023: Mix and allocate image patches belonging to different images to a same set to obtain the patch set.

In one embodiment, <u>in a case that the image patches are mixed and allocated,</u> at least one of the following allocation manners is included.

1. At least one image patch is selected from the image patches of each image, and is allocated to the same set to obtain the patch set.
A quantity of image patches obtained from each image may be the same or different.

2. Image patches of different images are mixed to obtain a patch set, and n image patches are randomly obtained from the patch set to constitute the patch set.

3. Some image patches are respectively obtained from images classified by different labels to constitute the patch set.

The foregoing allocation manners of the patch set are only schematic examples and are not limited in this embodiment.

In one embodiment, the set label corresponding to the patch set is determined, in response to the image patches in the patch set belonging to different images, based on the patch labels corresponding to the image patches.

In step 3021 to step 3023, the segmenting an image region of the image and constituting the patch set based on the image patches is described. After the image patches after the image region segmentation is obtained, not only image patches belonging to the same image may be constituted to a patch set, so that a more direct and efficient image analysis process can be performed on the image based on the patch set; but also image patches belonging to different images may be constituted to a patch set, so that cross analysis can be performed on patch relationships corresponding to different images, efficiency of patch correlation analysis is greatly improved and a breadth of image analysis is expanded.

In conclusion, according to the method in this embodiment, during a training process of an image processing model, for an image that requires patch recognition, the image processing model is trained using image patches and a patch set separately. While overall accuracy of recognizing the image is improved, accuracy of recognizing image content in the image patches is also improved. This not only avoids a problem of an erroneous recognition result of the entire image due to incorrect recognition of a single image patch, but also increases a screening negative rate when the image processing model is used to recognize a pathological lesion in a pathological image, to improve efficiency and accuracy of lesion recognition.

In the method according to this embodiment, image patches obtained by segmenting the same image are allocated to the same patch set, so that a label corresponding to the image patch is used as a set label, and efficiency of obtaining sample data is improved.

In the method according to this embodiment, image patches are obtained from the image patches obtained by segmentation of different images to constitute a patch set, so that diversity of sample data is improved, and an adaptability of the image processing model is improved.

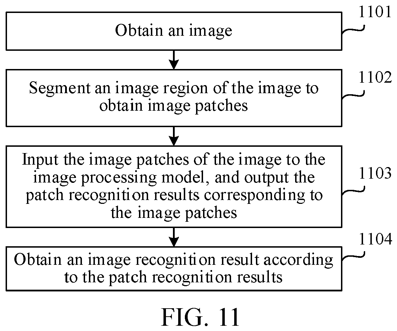

FIG. 11 is a flowchart of an image recognition method according to an exemplary embodiment of the present disclosure. The method may be applied to a terminal, or may be applied to a server. In this embodiment, an example in which the method is applied to a server is used for description. As shown in FIG. 11, the method includes the following steps.

Step 1101: Obtain an image.

The image is an image with to-be-recognized image content. In one embodiment, the image is an image with to-be-recognized image content, to be specific, an image is to be inputted to an image processing model to recognize whether image content is included in the image, and in a case that the image content is included in the image, a region where the image content is located.

For example, in a case that the image recognition method is applied to a pathological image recognition scenario, the image is a to-be-recognized image in a lesion region. In a case that the image recognition method is applied to a traffic image recognition scenario, the image is an image with a to-be-recognized transportation. In a case that the image recognition method is applied to a home video recognition scenario, the images is an image with a to-be-recognized creature (such as a pet or a person).

Step 1102: Segment an image region of the image to obtain image patches.

In one embodiment, the image is segmented into a plurality of image regions of equal size as the image patches. The image patches are used for separate recognition, and image recognition results of all image patches are combined to obtain an image recognition result corresponding to the image.

In other words, during the image recognition, image content is recognized for each image patch, and an inclusion of the image content in each image patch is obtained, so that the recognition results corresponding to all image patches are combined as the recognition result corresponding to the image.

If any image patch includes image content, the image is considered to include the image content; otherwise, if all image patches do not include image content, the image is considered to not include the image content.

Step 1103: Input the image patches of the image to the image processing model, and output the patch recognition results corresponding to the image patches.

In one embodiment, after the image patches are input to the image processing model, each image patch is recognized by using the image processing model, and the patch recognition result corresponding to each image patch is obtained. The patch recognition result indicates the inclusion of the image content in the image patches.

For example, in a case that the image recognition method is applied to a pathological image recognition scenario, the patch recognition result indicates an inclusion of a lesion region in each image patch, and in a case that the image patch includes a lesion region, the patch recognition result also indicates a position of the lesion region in the image patch. In a case that the image recognition method is applied to a traffic image recognition scenario, the patch recognition result indicates an inclusion of a transportation in each image patch, and in a case that the image patch includes a transportation, the patch recognition result also indicates an identifier of the transportation in the image patch, such as a license plate number. In a case that the image recognition method is applied to a home video recognition scenario, the patch recognition result indicates an inclusion of a creature in each image patch, and in a case that the image patch includes a creature, the patch recognition result also indicates a type of the creature in the image patch, such as a pet cat, a pet dog, or a person.

In one embodiment, after the image patches are inputted to the image processing model, recognition analysis is performed by a first fully connected layer and a second fully connected layer after training, and a probability of each image patch corresponding to a preset category is obtained, so that the patch recognition results of the image patches are obtained.

Step 1104: Obtain the image recognition result according to the patch recognition results.

In one embodiment, if there is any patch recognition result indicating that image content is included in the image patch, the image is considered to include the image content; otherwise, if patch recognition results of all image patches indicate that image content is not included, the image is considered to not include the image content.

In all embodiments of the present disclosure, to ensure a screening negative rate and avoid misrecognition of image content, the image patch is reviewed and recognized for the patch recognition result that image content is included in the image patch, for example, the image patches are inputted to the image processing model again for recognition.

In conclusion, according to the method in this embodiment, during a training process of an image processing model, for an image that requires patch recognition, the image processing model is trained using image patches and a patch set separately. While overall accuracy of recognizing the image is improved, accuracy of recognizing image content in the image patches is also improved. This not only avoids a problem of an erroneous recognition result of the entire image due to incorrect recognition of a single image patch, but also increases a screening negative rate when the image processing model is used to recognize a pathological lesion in a pathological image, to improve efficiency and accuracy of lesion recognition.

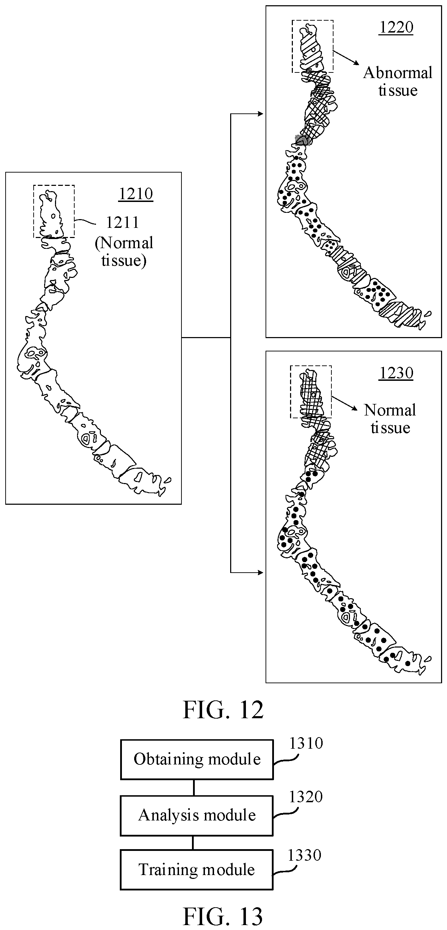

The image processing model trained in this embodiment of the present disclosure has strong robustness and specificity, and has focused attention. Taking pathological image recognition as an example, as shown in FIG. 12, when image recognition is performed on an original image 1210, a model in the related art and an image processing model according to the embodiments of the present disclosure are respectively used. It may be learned from FIG. 12, a result 1220 is obtained by using the image processing model the related art, and a result 1230 is obtained by using the image processing model according to the embodiments of the present disclosure. Both result 1220 and result 1230 are based on a great attention weight of a corresponding cancer region and give a high attention to remaining suspicious places. The technical solutions according to the embodiments of the present disclosure are more focused than the technical solutions according to the related art. A patch represented by a region 1211 is a normal tissue, in the related art, a high attention is provided, but in the embodiments of the present disclosure, a low attention is provided. This directly results in a prediction result of the image being positive in the related art, while a network correctly predicts the image to be negative.

For the same test set, different models output different predicted probability distributions. A prediction probability of a positive sample in the technical solutions of the related art is mainly above 0.9, and the positive sample can basically be predicted correctly. A prediction probability of a negative sample tends to be uniformly distributed, and the prediction probability of a positive sample and the prediction probability of a positive sample do not have a large class interval. In the solutions according to the embodiments of the present disclosure, most positive samples can also be predicted correctly, and high confidence is achieved, and for a negative sample, a large class interval may be made between prediction results of positive samples and negative samples. In other words, the image processing model according to the embodiments of the present disclosure has strong robustness.

FIG. 13 is a structural block diagram of an apparatus for training an image processing model according to an exemplary embodiment of the present disclosure. As shown in FIG. 13, the apparatus includes the following parts:
An obtaining module 1310 is configured to obtain one or more training samples each comprising a sample image and an image label, the image label indicating an image content of the sample image.

The obtaining module 1310 is further configured to: segment tone or more sample images into multiple image patches, and compose a patch set of the image patches, the patch set being labeled with a set label based on the image label.

An analysis module 1320 is configured to: perform feature analysis on the image patches by using the image processing model, to obtain a patch analysis result, and determine, based on a second difference between the image label and the patch analysis result, a second cross entropy loss.

The analysis module 1320 is further configured to: perform feature analysis on the image patches by using the image processing model, to obtain a patch analysis result, and determine, based on a second difference between the image label and the patch analysis result, a second cross entropy loss.

A training module 1330 is configured to train the image processing model based on the relative entropy loss, the first cross entropy loss, and the second cross ssssentropy loss, the trained image processing model being configured to recognize image content in an image.

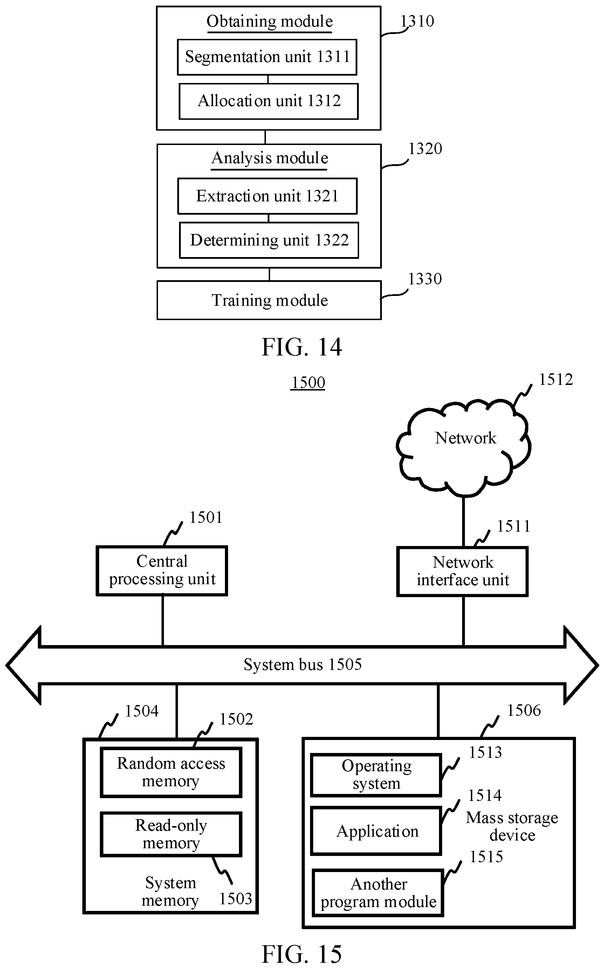

In an optional embodiment, as shown in FIG. 14, the analysis module 1320 includes:

an extraction unit 1321, configured to perform feature extraction on the patch set by using the image processing model to obtain a set feature; and

a determining unit 1322, configured to determine, based on an attention distribution corresponding to the set feature and an expected distribution corresponding to the set label, the relative entropy loss corresponding to the patch set the attention distribution being a distribution obtained by predicting image content in the patch set, and the expected distribution being a distribution of the patch set indicated by the set label.

The determining unit 1322 is further configured to determine, based on a difference between a recognition result of image content recognition of the set feature and the set label, the first cross entropy loss corresponding to the patch set.

In an optional embodiment, the determining unit 1322 is further configured to: perform first feature processing on the set feature by a first fully connected layer in the image processing model to obtain a first fully connected feature; and perform attention analysis on the first fully connected feature by an attention layer to obtain an attention distribution corresponding to the patch set.

The determining unit 1322 is further configured to: determine, based on the set label, an expected distribution corresponding to the patch set; and determine, based on a difference between the attention distribution and the expected distribution, the relative entropy loss corresponding to the patch set.

In an optional embodiment, the determining unit 1322 is further configured to determine, in response to the set label indicating that the image content does not exist in the image patches in the patch set, that the expected distribution of the patch set is a uniform distribution.

The determining unit 1322 is further configured to: obtain, in response to the set label indicating that the image content exists in the image patches in the patch set, patch labels corresponding to the image patches in the set label; and determine the expected distribution of the patch set based on the patch labels.

In an optional embodiment, the determining unit 1322 is further configured to determine, in response to the patch labels including classification labels, the expected distribution of the patch set based on classification labels corresponding to the image patches, each classification label having a corresponding expected distribution of an instance.

The determining unit 1322 is further configured to determine, in response to the patch labels including the pixel distribution labels, the expected distribution of the patch set based on distributions labeled by the pixel distribution labels, each pixel distribution label is used for regionally labeling pixel content in the image patches, and the pixel content indicates a pixel position of the image content in the image patches.

In an optional embodiment, the determining unit 1322 is further configured to perform first feature processing on the set feature by a first fully connected layer in the image processing model to obtain a first fully connected feature.

The determining unit 1322 is further configured to: perform second feature processing on the first fully connected feature and an attention distribution corresponding to the patch set by a second fully connected layer in the image processing model, to obtain a second fully connected feature as a recognition result; and determine, based on a difference between the second fully connected feature and the set label, the first cross entropy loss corresponding to the patch set.

In an optional embodiment, the analysis module 1320 includes:

the extraction unit 1321, configured to perform feature extraction on each image patch by using the image processing model to obtain a patch feature; and

the determining unit 1322, configured to: perform first feature processing on the patch feature by the first fully connected layer in the image processing model to obtain a third fully connected feature; perform second feature processing on the third fully connected feature by a second fully connected layer in the image processing model, to obtain a fourth fully connected feature as a patch analysis result; and determine, based on a difference between the fourth fully connected feature and the patch labels, the second cross entropy loss corresponding to the image patches, the patch labels being labels corresponding to the image patches determined based on the image label.

In an optional embodiment, the obtaining module 1310 includes:

a segmentation unit 1311, configured to segment an image region of the image to obtain the image patches;

an allocation unit 1312, configured to allocate image patches belonging to a same image to a same set to obtain the patch set; or mix and allocate image patches belonging to different images to a same set to obtain the patch set.

In an optional embodiment, the analysis module 1320 is further configured to: use, in response to the image patches in the patch set belonging to a same image, a image label corresponding to the image as a set label corresponding to the patch set.

The analysis module 1320 is further configured to determine, in response to the image patches in the patch set belonging to different images, the set label corresponding to the patch set based on patch labels corresponding to the image patches.

In an optional embodiment, the training module 1330 is further configured to: perform weighted fusion on the relative entropy loss, the first cross entropy loss, and the second cross entropy loss to obtain a total loss value; and train the image processing model based on the total loss value.

In conclusion, for the apparatus according to this embodiment, during a training process of an image processing model, for an image that requires patch recognition, the image processing model is trained using image patches and a patch set separately. While overall accuracy of recognizing the image is improved, accuracy of recognizing image content in the image patches is also improved. This not only avoids a problem of an erroneous recognition result of the entire image due to incorrect recognition of a single image patch, but also increases a screening negative rate when the image processing model is used to recognize a lesion in a pathological image, to improve efficiency and accuracy of lesion recognition.

The apparatus for training an image processing model according to the embodiments is illustrated with an example of division of the foregoing function modules. In practical application, the foregoing functions may be allocated to and completed by different function modules according to requirements, in other words, the internal structure of the apparatus is divided into different function modules, to complete the entire or a part of the functions described above. In addition, the apparatus for training an image processing model according to the embodiments and the method embodiments for training an image processing model belong to the same concept. For the specific implementation procedure, refer to the method embodiment, and details are not described herein again.

FIG. 15 is a schematic diagram of a structure of a computer device according to an exemplary embodiment of the present disclosure. The computer device may be the server shown in FIG. 2.

Specifically, a computer device 1500 includes a central processing unit (CPU) 1501, a system memory 1504 including a random access memory (RAM) 1502 and a read only memory (ROM) 1503, and a system bus 1505 connecting the system memory 1504 to the central processing unit 1501. The computer device 1500 further includes a mass storage device 1506 configured to store an operating system 1513, an application 1514, and another program module 1515.

The mass storage device 1506 is connected to the central processing unit 1501 by using a mass storage controller (not shown) connected to the system bus 1505. Generally, a computer-readable medium may include a computer storage medium and a communication medium.

According to the embodiments of the present disclosure, the computer device 1500 may alternatively be connected through a network such as the Internet, to a remote computer on the network to run. To be specific, the computer device 1500 may be connected to a network 1512 by using a network interface unit 1511 connected to the system bus 1505, or may be connected to another type of network or a remote computer system (not shown) by using the network interface unit 1511.

The memory further includes one or more programs that are stored in the memory and are configured to be executed by the CPU.

An embodiment of the present disclosure also provides a computer device. The computer device may be implemented as the terminal or the server as shown in FIG. 2. The computer device includes a processor and a memory. The memory has at least one instruction, at least one program, a code set, or an instruction set stored therein. The at least one instruction, the at least one program, the code set, or the instruction set is loaded and executed by the processor to implement the method for training an image processing model according to the method embodiments of the present disclosure.

An embodiment of the present disclosure also provides a computer-readable storage medium having at least one instruction, at least one program, a code set, or an instruction set stored thereon. The at least one instruction, the at least one program, the code set, or the instruction set is loaded and executed by a processor to implement the method for training an image processing model according to the method embodiments of the present disclosure.

An embodiment of the present disclosure also provides a computer program product or a computer program. The computer program product or the computer program includes computer instructions stored in a computer-readable storage medium. A processor of a computer device reads the computer instructions from the computer-readable storage medium, and the processor executes the computer instructions, so that the computer device performs the method for training an image processing model according to any one of the embodiments.

In one embodiment, the computer-readable storage medium may include: a read-only memory (ROM), a random access memory (RAM), a solid-state drive (SSD), an optical disc, or the like. The random access memory may include a resistance random access memory (ReRAM) and a dynamic random access memory (DRAM). The serial numbers of the embodiments of the present disclosure are merely for description, and do not represent the merits of the embodiments.

**Claims**

1. A method for training an image processing model, performed by a computer device, the method comprising:

obtaining one or more training samples, each comprising a sample image and an image label, the image label indicating an image content of the sample image;

segmenting one or more sample images into multiple image patches, and composing a patch set of the image patches, the patch set being labeled with a set label based on the image label, and the sample image patches being obtained by segmenting an image region of the sample image;

performing feature analysis on the patch set by using an image processing model, to obtain a set analysis result, and determining, based on a first difference between the set label and the set analysis result, a relative entropy loss and a first cross entropy loss corresponding to the sample patch bag;

performing feature analysis on the sample image patches by using the image processing model, to obtain a patch analysis result, and determining, based on a second difference between the image label and the patch analysis result, a second cross entropy loss corresponding to the sample image patches; and

training the image processing model based on the relative entropy loss, the first cross entropy loss, and the second cross entropy loss, the trained image processing model being configured to recognize image content in an image.

2. The method according to claim 1, wherein the performing feature analysis on the patch sets by using an image processing model, to obtain a set analysis result, and determining, based on a first difference between the set label and the set analysis result, a relative entropy loss and a first cross entropy loss comprises:

performing feature extraction by using the image processing model on the patch set to obtain a set feature;

determining, based on an attention distribution corresponding to the set feature and an expected distribution corresponding to the set label, the relative entropy loss corresponding to the patch set, the attention distribution being a distribution obtained by predicting image content in the patch set, and the expected distribution being a distribution of the patch set indicated by the set label; and

determining, based on a difference between the set label and a recognition result of image content recognition of the set feature, the first cross entropy loss corresponding to the patch set, the set analysis result comprising the recognition result.

3. The method according to claim 2, wherein the determining, based on an attention distribution corresponding to the set feature and an expected distribution corresponding to the set label, the relative entropy loss corresponding to the patch set comprises:

performing first feature processing on the set feature by a first fully connected layer in the image processing model to obtain a first fully connected feature;

performing attention analysis on the first fully connected feature by an attention layer to obtain the attention distribution corresponding to the patch set;

determining, based on the set label, the expected distribution corresponding to the patch set; and

determining, based on a difference between the attention distribution and the expected distribution, the relative entropy loss corresponding to the patch set.

4. The method according to claim 3, wherein the determining, based on the set label, an expected distribution corresponding to the patch set comprises:

determining, in a case that the set label indicates that the image content is not contained in the image patches in the patch set, the expected distribution of the patch set to be a uniform distribution;

obtaining, in a case that the set label indicates that the image content is contained in the image patches in the patch set, patch labels corresponding to the image patches in the set label; and

determining the expected distribution of the patch set based on the patch labels.

5. The method according to claim 4, wherein the determining the expected distribution of the patch set based on the patch labels comprises:

determining, in a case that the patch labels comprise classification labels, the expected distribution of the patch set based on classification labels corresponding to the image patches, each classification label having a corresponding expected distribution of an instance; and

determining, in a case that the patch labels comprise the pixel distribution labels, the expected distribution of the patch set based on distributions labeled by the pixel distribution labels, each pixel distribution labels being used for regionally labeling pixel content in the image patches, and the pixel content indicating a pixel position of the image content in the image patches.

6. The method according to claim 2, wherein the determining, based on a difference between the set label and a recognition result of image content recognition of the set feature, the first cross entropy loss corresponding to the patch set, comprises:

performing first feature processing on the set feature by a first fully connected layer in the image processing model to obtain a first fully connected feature;

performing second feature processing on the first fully connected feature and an attention distribution corresponding to the patch set by a second fully connected layer in the image processing model, to obtain a second fully connected feature as a recognition result; and

determining, based on a difference between the second fully connected feature and the set label, the first cross entropy loss corresponding to the patch set.

7. The method according to any one of claims 1 to 6, wherein the performing feature analysis on the image patches by using the image processing model, and determining, based on a second difference between the image label and a patch analysis result, a second cross entropy loss corresponding to the image patches comprises:

performing feature extraction on each image patch by using the image processing model to obtain a patch feature;

performing first feature processing on the patch feature by the first fully connected layer in the image processing model to obtain a third fully connected feature;

performing second feature processing on the third fully connected feature by a second fully connected layer in the image processing model, to obtain a fourth fully connected feature as a patch analysis result; and

determining, based on a difference between the fourth fully connected feature and the patch labels, the second cross entropy loss corresponding to the image patches, the patch labels being labels corresponding to the image patches determined based on the image label.

8. The method according to any one of claims 1 to 6, wherein the composing a patch set of the image patches, the patch set being labeled with a set label based on the image label comprises:

allocating image patches belonging to a same image to a same set to obtain the patch set; or

mixing and allocating image patches belonging to different sample images to a same set to obtain the patch set.

9. The method according to claim 8, wherein the method further comprises:

determining, in the case that the image patches in the patch set belong to a same sample image, the set label corresponding to the patch set to be the image label corresponding to the sample image; and

determining, in a case that the image patches in the patch set belong to different sample images, the set label corresponding to the patch set based on the patch labels corresponding to the image patches.

10. The method according to any one of claims 1 to 6, wherein the training the image processing model based on the relative entropy loss, the first cross entropy loss, and the second cross entropy loss comprises:

performing weighted fusion on the relative entropy loss, the first cross entropy loss, and the second cross entropy loss to obtain a total loss value; and

training the image processing model based on the total loss value.

11. An apparatus for training an image processing model, the apparatus comprising:

an obtaining module, configured to obtain one or more training samples each comprising a sample image and an image label, the image label indicating an image content of the sample image;

the obtaining module being further configured to segment one or more sample images into multiple image patches, and composing a patch set of the image patches, the patch set being labeled with a set label based on the image label;

an analysis module, configured to: perform feature analysis on the patch set by using an image processing model, to obtain a set analysis result, and determining, based on a first difference between the set label and the set analysis result, a relative entropy loss and a first cross entropy loss;

the analysis module being further configured to perform feature analysis on the image patches by using the image processing model, to obtain a patch analysis result, and determining, based on a second difference between the image label and the patch analysis result, a second cross entropy loss; and

a training module, configured to train the image processing model based on the relative entropy loss, the first cross entropy loss, and the second cross entropy loss, the trained image processing model being configured to recognize image content in an image.

12. The apparatus according to claim 11, wherein

the analysis module is further configured to perform feature extraction by using the image processing model on the patch set to obtain a set feature;

determine, based on an attention distribution corresponding to the set feature and an expected distribution corresponding to the set label, the relative entropy loss corresponding to the patch set, the attention distribution being a distribution obtained by predicting image content in the patch set, and the expected distribution being a distribution of the patch set indicated by the set label; and determine, based on a difference between the set label and a recognition result of image content recognition of the set feature, the first cross entropy loss corresponding to the patch set, the set analysis result comprising the recognition result.

13. The apparatus according to claim 12, wherein
the analysis module is further configured to: perform first feature processing on the set feature by a first fully connected layer in the image processing model to obtain a first fully connected feature; perform attention analysis on the first fully connected feature by an attention layer to obtain the attention distribution corresponding to the patch set; determine, based on the set label, the expected distribution corresponding to the patch set; and determine, based on a difference between the attention distribution and the expected distribution, the relative entropy loss corresponding to the patch set.

14. The apparatus according to claim 13, wherein
the analysis module is further configured to: determine, in response to the bag label indicating that the image content does not exist in the sample image patches in the sample patch bag, that the expected distribution of the sample patch bag is a uniform distribution; obtain, in response to the bag label indicating that the image content exists in the sample image patches in the sample patch bag, patch labels corresponding to the sample image patches in the bag label; and determine the expected distribution of the sample patch bag based on the patch labels.

15. The apparatus according to claim 14, wherein
the analysis module is further configured to: determine, in response to the patch labels comprising classification labels, the expected distribution of the sample patch bag based on classification labels corresponding to the sample image patches, each classification label having a corresponding expected distribution of an instance; and determine, in response to the patch labels comprising the pixel distribution labels, the expected distribution of the sample patch bag based on distributions labeled by the pixel distribution labels, each pixel distribution label being used for regionally labeling pixel content in the sample image patches, and the pixel content indicating a pixel position of the image content in the sample image patches.

16. The apparatus according to claim 12, wherein
the analysis module is further configured to: perform first feature processing on the bag feature by a first fully connected layer in the image recognition model to obtain a first fully connected feature; perform second feature processing on the first fully connected feature and an attention distribution corresponding to the sample patch bag by a second fully connected layer in the image recognition model, to obtain a second fully connected feature as a recognition result; and determine, based on a difference between the second fully connected feature and the bag label, the first cross entropy loss corresponding to the sample patch bag.

17. The apparatus according to claim 12, wherein

the analysis module is further configured to: perform feature extraction on each sample image patch by using the image recognition model to obtain a patch feature;

perform first feature processing on the patch feature by the first fully connected layer in the image recognition model to obtain a third fully connected feature; perform second feature processing on the third fully connected feature by a second fully connected layer in the image recognition model, to obtain a fourth fully connected feature as a patch analysis result; and determine, based on a difference between the fourth fully connected feature and the patch labels, the second cross entropy loss corresponding to the sample image patches, the patch labels being labels corresponding to the sample image patches determined based on the sample label.

18. A computer device, comprising a processor and a memory, the memory having at least one program stored therein, and the at least one program being loaded and executed by the processor to implement the method for training an image processing model according to any one of claims 1 to 10.

19. A computer-readable storage medium, having at least one program stored thereon, and the at least one program being loaded and executed by a processor to implement the method for training an image processing model according to any one of claims 1 to 10.

FIG. 1

FIG. 2

Obtain one or more training samples, each comprising a sample image and an image label, the image label indicating an image content of the sample image ⟩301

Segment one or more sample images into multiple image patches, and compose a patch set of the image patches, the patch set being labeled with a set label based on the image label ⟩302

Perform feature analysis on the patch set by using an image processing model, to obtain a set analysis result, and determine, based on a first difference between the set label and the set analysis result, a relative entropy loss and a first cross entropy loss ⟩303

Perform feature analysis on the image patches by using the image processing model, to obtain a patch analysis result, and determine, based on a second difference between the image label and the patch analysis result, a second cross entropy loss ⟩304

Train the image processing model based on the relative entropy loss, the first cross entropy loss, and the second cross entropy loss ⟩305

FIG. 3

Patches

FIG. 4

Obtain one or more training samples, each comprising an image and an image label, the image label indicating image content of the image — 301

Segment one or more sample images into multiple image patches, and compose a patch set of the image patches, the patch set being labeled with a set label based on the image label — 302

Perform feature extraction on the patch set by using an image recognition model to obtain a set feature — 3031

Perform feature extraction on each image patch by using the image recognition model to obtain a patch feature — 3041

Perform first feature processing on the set feature by a first fully connected layer in the image recognition model to obtain a first fully connected feature — 3032

Perform first feature processing on the patch feature by the first fully connected layer in the image recognition model to obtain a third fully connected feature — 3042

3034 — Determine, based on the set label, an expected distribution corresponding to the patch set

Perform attention analysis on the first fully connected feature by an attention layer to obtain an attention distribution corresponding to the patch set

3036 — Perform second feature processing on the first fully connected feature and an attention distribution corresponding to the patch set by a second fully connected layer in the image recognition model, to obtain a second fully connected feature as a recognition result

Perform second feature processing on the third fully connected feature by the second fully connected layer in the image recognition model, to obtain a fourth fully connected feature as a patch analysis result — 3043

3033

Determine, based on a difference between the attention distribution and the expected distribution, a relative entropy loss corresponding to the patch set — 3035

3037 — Determine, based on a difference between the second fully connected feature and the set label, a first cross entropy loss corresponding to the patch set

Determine, based on a difference between the fourth fully connected feature and patch labels, the second cross entropy loss corresponding to the image patches — 3044

Train the image recognition model based on the relative entropy loss, the first cross entropy loss, and the second cross entropy loss — 305

## FIG. 5

FIG. 6

FIG. 7

FIG. 8

FIG. 9

FIG. 10

```
┌─────────────────────────────────────────────┐
│              Obtain an image                  │  1101
└─────────────────────────────────────────────┘
                      │
                      ▼
┌─────────────────────────────────────────────┐
│   Segment an image region of the image to     │  1102
│          obtain image patches                 │
└─────────────────────────────────────────────┘
                      │
                      ▼
┌─────────────────────────────────────────────┐
│   Input the image patches of the image to the │
│    image processing model, and output the     │  1103
│  patch recognition results corresponding to   │
│            the image patches                  │
└─────────────────────────────────────────────┘
                      │
                      ▼
┌─────────────────────────────────────────────┐
│ Obtain an image recognition result according  │  1104
│      to the patch recognition results         │
└─────────────────────────────────────────────┘
```

FIG. 11

FIG. 12

FIG. 13

Obtaining module 1310

Segmentation unit 1311

Allocation unit 1312

Analysis module 1320

Extraction unit 1321

Determining unit 1322

Training module 1330

FIG. 14

1500

1512

Network

1501

Central processing unit

1511

Network interface unit

System bus 1505

1504

1502

Random access memory

Read-only memory

System memory 1503

1506

1513

Operating system

1514

Application

Mass storage device

1515

Another program module

FIG. 15

## INTERNATIONAL SEARCH REPORT

| | International application No. |
|---|---|
| | **PCT/CN2023/088131** |

### A. CLASSIFICATION OF SUBJECT MATTER

G06N 3/08(2023.01)i

According to International Patent Classification (IPC) or to both national classification and IPC

### B. FIELDS SEARCHED

Minimum documentation searched (classification system followed by classification symbols)

IPC: G06N,G06K,G06T,G06V

Documentation searched other than minimum documentation to the extent that such documents are included in the fields searched

Electronic data base consulted during the international search (name of data base and, where practicable, search terms used)

VEN, CNTXT, WOTXT, EPTXT, USTXT, CNKI, IEEE: 图像, 识别, 多实例学习, 切片, 包, 组, 标签, 训练, 交叉熵, 相对熵, 注意力, image, recognition, multi-instance learning, slicing, patch, group, label, training, cross-entropy, relative entropy, attention

### C. DOCUMENTS CONSIDERED TO BE RELEVANT

| Category* | Citation of document, with indication, where appropriate, of the relevant passages | Relevant to claim No. |
|---|---|---|
| PX | CN 114648680 A (TENCENT TECHNOLOGY (SHENZHEN) CO., LTD.) 21 June 2022 (2022-06-21) claims 1-14, and description, paragraphs [0195]-[0206] | 1-19 |
| A | CN 113920109 A (SHENYANG NEUSOFT INTELLIGENT MEDICAL TECHNOLOGY RESEARCH INSTITUTE CO., LTD.) 11 January 2022 (2022-01-11) description, paragraphs [0064]-[0098] | 1-19 |
| A | CN 113496257 A (SHANGHAI UNITED IMAGING INTELLIGENCE HEALTHCARE CO., LTD.) 12 October 2021 (2021-10-12) entire document | 1-19 |
| A | CN 113454733 A (F. HOFFMANN-LA ROCHE AG) 28 September 2021 (2021-09-28) entire document | 1-19 |
| A | CN 111192678 A (SHANGHAI AITROX INFORMATION TECHNOLOGY CO., LTD.) 22 May 2020 (2020-05-22) entire document | 1-19 |
| A | US 2020066407 A1 (GOOGLE LLC) 27 February 2020 (2020-02-27) entire document | 1-19 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 June 2023** | **23 June 2023** |

| Name and mailing address of the ISA/CN | Authorized officer |
|---|---|
| **China National Intellectual Property Administration (ISA/ CN) China No. 6, Xitucheng Road, Jimenqiao, Haidian District, Beijing 100088** | |
| | Telephone No. |

Form PCT/ISA/210 (second sheet) (July 2022)

International application No.

**PCT/CN2023/088131**

| Patent document cited in search report | | | Publication date (day/month/year) | Patent family member(s) | | | Publication date (day/month/year) |
|---|---|---|---|---|---|---|---|
| CN | 114648680 | A | 21 June 2022 | HK | 40067582 | A0 | 09 September 2022 |
| CN | 113920109 | A | 11 January 2022 | None | | | |
| CN | 113496257 | A | 12 October 2021 | None | | | |
| CN | 113454733 | A | 28 September 2021 | JP | 2022527145 | A | 31 May 2022 |
| | | | | US | 2021350176 | A1 | 11 November 2021 |
| | | | | WO | 2020182710 | A1 | 17 September 2020 |
| | | | | EP | 3938948 | A1 | 19 January 2022 |
| | | | | HK | 40051109 | A0 | 31 December 2021 |
| CN | 111192678 | A | 22 May 2020 | None | | | |
| US | 2020066407 | A1 | 27 February 2020 | WO | 2018156133 | A1 | 30 August 2018 |
| | | | | EP | 3570753 | A1 | 27 November 2019 |
| | | | | CN | 110337644 | A | 15 October 2019 |

Form PCT/ISA/210 (patent family annex) (July 2022)

**EP 4 506 859 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210533141